# EUROPÄISCHE PATENTANMELDUNG

(11) **EP 2 899 806 A1**
(43) Veröffentlichungstag der Anmeldung: **29.07.2015**
(21) Anmeldenummer: 15151409.8
(22) Anmeldetag: 16.01.2015
(51) Int. Cl.: H01Q 1/27, A63B 29/02, H01Q 21/24

(54) **Rucksack mit einem Suchgerät**

(30) Priorität: 17.01.2014 EP 14151666
(71) Anmelder: Ortovox Sportartikel GmbH, 82024 Taufkirchen (DE)
(72) Erfinder: Kotlaba, Dieter, 82515 Wolfratshausen (DE); Matzner, Rolf, Dr., 80639 München (DE)
(74) Vertreter: Hofstetter, Schurack & Partner

(57) **Zusammenfassung**

Die Erfindung betrifft einen Rucksack (10) mit einem Lawinen-Verschütteten Suchgerät, welches eine Empfangseinheit (18) mit mindestens einer ersten und einer zweiten Suchantenne (20, 22) zum Empfangen mindestens eines Sendesignals umfasst. Das Sendesignal umfasst einen mit einer vorgebbaren Sendepuls-Periode ausgestrahlten Sendepuls einer vorgebbaren Sendefrequenz. Die Empfangseinheit (18) ist dazu ausgelegt, mindestens einem empfangenen Sendesignal eine Richtung bezogen auf die Lage des Suchgeräts zuzuordnen und diese Richtung an ihrem Ausgang an eine Anzeigevorrichtung (42) bereitzustellen. Der Rucksack (10) weist mindestens eine erste und eine zweite orthogonal zueinander angeordnete Flächen (12, 14) auf. Die erste Suchantenne (20) ist mit der ersten Fläche (12) gekoppelt und die zweite Suchantenne (22) mit der zweiten Fläche (14), sodass die erste und die zweite Suchantenne (20, 22) in orthogonaler Stellung zueinander fixiert sind.

## Beschreibung

Die Erfindung betrifft einen Rucksack mit einem Suchgerät, bei welchem sich insbesondere um ein Lawinen-Verschütteten-Suchgerät (LVS) handeln kann. Das Suchgerät umfasst eine Empfangseinheit mit mindestens einer ersten und einer zweiten Suchantenne zum Empfangen mindestens eines Sendesignals, welches einen mit einer vorgebbaren Sendepuls-Periode ausgestrahlten Sendepuls einer vorgebbaren Sendefrequenz umfasst. Die Empfangseinheit ist ausgelegt, mindestens einem empfangenen Sendesignal eine Richtung bezogen auf die Lage des Suchgeräts zuzuordnen und diese Richtung an ihrem Ausgang an eine Anzeigevorrichtung bereitzustellen. Der Rucksack weist mindestens eine erste und eine zweite orthogonal zueinander angeordnete Flächen auf.

Tragbare Suchgeräte für das Suchen von beispielsweise in Lawinen verschütteten Personen werden heutzutage etwa von Snowboardern und Skifahrern verwendet, welche sich abseits gesicherter Pisten bewegen. Ein solches Suchgerät befindet sich normalerweise im Sendemodus. Hierbei sendet das Suchgerät den Sendepuls der vorgebbaren Sendefrequenz mit der vorgebbaren Sendepuls-Periode aus. Falls eine Person von einer Lawine verschüttet wird, können die nicht verschütteten Personen ihre Suchgeräte in einen Empfangsmodus umschalten. In dieser Betriebsart dienen die Suchantennen des jeweiligen Suchgeräts dem Orten der verschütteten Person. Ein solches Lawinen-Verschütteten-Suchgerät kann beispielsweise in einem Rucksack angeordnet werden, bei welchem eine Bodenfläche und an die Bodenfläche angrenzende Flächen einen Aufnahmeraum des Rucksacks begrenzen.

Die Funktionsweise eines tragbaren Suchgeräts ist beispielsweise in der WO 2013/143015 A1 beschrieben. Hierbei ist vorgesehen, dass Antennen am Körper der das Suchgerät tragenden Person in einiger Entfernung von einem Empfänger des Suchgeräts angeordnet werden, damit diese Antennen weniger Störsignale empfangen.

Ein weiteres Lawinen-Verschütteten-Suchgerät ist in der WO 2012/107171 A1 beschrieben.

Des Weiteren beschreibt die CH 706 278 A1 ein Lawinen-Verschütteten-Suchgerät, bei welchem Antennen in einem Kleidungsstück, einem Tragegurt oder einem Rückenprotektor angeordnet sind.

Bei der Integration von Antennen in ein Kleidungsstück, einen Tragegurt oder einen Rückenprotektor lassen sich nur auf sehr komplexe Weise drei Raumachsen mittels der Suchantennen beziehungsweise Sendeantennen abdecken. Zudem schränkt die Unterbringung insbesondere von Rahmenantennen in derartigen Vorrichtungen das Design der Vorrichtungen erheblich ein. Vorstellbar ist es zwar, dass eine Jacke oder Weste eine um den Oberkörper der die Jacke oder Weste tragenden Person in horizontaler Ausrichtung umlaufende Rahmenantenne aufweist. Jedoch könnte eine solche Jacke oder Weste dann keinen Frontreißverschluss besitzen.

Aufgabe der vorliegenden Erfindung ist es daher, einen verbesserten Rucksack der eingangs genannten Art zu schaffen.

Diese Aufgabe wird durch einen Rucksack mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Der erfindungsgemäße Rucksack mit einem Suchgerät umfasst eine Empfangseinheit, die mindestens eine erste und eine zweite Suchantenne zum Empfangen mindestens eines Sendesignals umfasst. Das Sendesignal umfasst einen mit einer vorgebbaren Sendepuls-Periode ausgestrahlten Sendepuls einer vorgebbaren Sendefrequenz. Die Empfangseinheit ist dazu ausgelegt, mindestens einem empfangenen Sendesignal eine Richtung bezogen auf die Lage des Suchgeräts zuzuordnen. Diese Richtung kann von der Empfangseinheit an einem Ausgang derselben einer Anzeigevorrichtung bereitgestellt werden. Auf der Anzeigevorrichtung ist dann die Richtung anzeigbar, so dass eine das Suchgerät nutzende Person ein das Sendesignal aussendendes Suchgerät auffinden kann. Der Rucksack weist mindestens eine erste Fläche und mindestens eine zweite Fläche auf, welche orthogonal zueinander angeordnet sind. Hierbei ist die erste Suchantenne mit der ersten Fläche gekoppelt und die zweite Suchantenne mit der zweiten Fläche. Die erste und die zweite Suchantenne sind somit in orthogonaler Stellung zueinander fixiert.

Dem liegt die Erkenntnis zugrunde, dass ein Rucksack durch seine typische Grundform große Seitenflächen und eine Grundfläche oder Bodenfläche aufweist, welche üblicherweise aus flexiblem Kunststoffmaterial gebildet sind und einen Aufnahmeraum des Rucksacks begrenzen. Die Flächen können somit auch als Begrenzungsflächen bezeichnet werden. Diese Flächen werden vorliegend genutzt, um die Suchantennen an diesen Flächen oder innerhalb dieser Flächen unterzubringen. Insbesondere bietet der Rucksack im Gegensatz etwa zu einem flachen Rückenprotektor bis zu drei Flächen, deren Flächennormalen in guter Näherung ein Orthogonalsystem bilden. Dies ist besonders vorteilhaft, um entsprechend mindestens zwei aufeinander senkrecht stehende Suchantennen oder Empfangsantennen in dem Rucksack unterzubringen.

Die Flächen des Rucksacks, mit welchen die Suchantennen gekoppelt sind, müssen jedoch nicht notwendigerweise exakt orthogonal sein. Vielmehr spannen die Flächennormalen der Flächen eine (zweidimensionale) Suchebene beziehungsweise bei drei Flächen einen (dreidimensionalen) Suchraum auf. Idealerweise stehen hierbei die Flächen und damit die Flächennormalen orthogonal zueinander. Dann werden nämlich die Koordinaten der Suchebene/des Suchraums linear unabhängig. Nur in diesem Fall ist das Signal-Störleistungsverhältnis (SNR) des Empfangssignals richtungsunabhängig. Insbesondere wird durch aufeinander senkrecht stehenden Flächennormalen das schlechteste Signal-Störleistungsverhältnis als Funktion der Richtung optimiert. Je exakter also die Flächennormalen orthogonaler zueinander ausgerichtet sind, umso besser ist dies für die Bestimmung der Richtung mittels der Suchantennen.

Der Rucksack ist also mit mindestens zwei in diesen integrierten Suchantennen ausgestattet, deren Hauptempfangsrichtungen im Wesentlichen orthogonal aufeinander stehen. Dadurch kann über geometrische Gesetzmäßigkeiten der Eintrittswinkel des Sendesignals in wenigstens einer Ebene ermittelt werden. Die Suchantennen des Suchgeräts können im Sendemodus des Suchgeräts auch als Sendeantennen genutzt werden.

Im Vergleich zur Integration der Antennen in ein Kleidungsstück, einen Tragegurt, einen Rückenprotektor oder dergleichen bietet der Ansatz, die Suchantennen mit Flächen des Rucksacks zu koppeln, deutlich mehr Fläche und Volumen, um die Antennen des Suchgeräts unterzubringen. Dies erhöht die technische Effizienz des Systems und bringt verringerte Kosten mit sich. Durch Nutzung des Rucksacks mit dem Suchgerät, dessen wenigstens zwei Antennen mit den wenigstens zwei Flächen gekoppelt sind, lässt sich auch die zum Suchen eines Verschütteten notwendige Zeit deutlich verringern. Die Überlebenschancen des Verschütteten steigen dadurch erheblich. Entsprechend ist ein verbesserter Rucksack geschaffen.

Der Ansatz, die orthogonal zueinander ausgerichteten Antennen in oder an den Flächen des Rucksacks unterzubringen, bietet insbesondere ohne zusätzlichen Aufwand und ohne Designeinschränkungen die Möglichkeit, wenigstens zwei Raumachsen mittels Suchantennen abzudecken.

Im Vergleich zur Integration der Suchantenne in ein Kleidungsstück oder einen Tragegurt können durch das Koppeln der Suchantennen mit den Flächen des Rucksacks zudem wenigstens zwei vergleichsweise große Suchantennen besonders einfach in einem starren Winkelverhältnis zueinander angeordnet und gehalten werden.

Für den Fall einer Lawinenverschüttung einer Person führt die Mehrheit der Anwendergruppe von Lawinen-Verschütteten-Suchgeräten auch eine Lawinensonde und eine Schaufel mit sich. Die beiden letztgenannten Gegenstände werden üblicherweise am oder im Rucksack getragen, welcher somit bei den relevanten Tätigkeiten, insbesondere bei der Suche nach dem Verschütteten, stets mitgeführt wird. Die essentiellen Baukomponenten eines Suchgeräts oder einer solchen Sende- und Suchvorrichtung haben ein Gewicht von wenigstens 100 g bis 250 g und verfügen über starre Bauteile. Das Tragen eines solchen Suchgeräts in einem Kleidungsstück, einem Tragegurt oder ähnlichem stellt somit eine erhebliche Einschränkung im Tragekomfort und im Bewegungskomfort für den Nutzer des Suchgeräts dar. Bei der Integration zumindest der Antennen in den Rucksack tritt eine solche Einschränkung dagegen kaum auf. Insbesondere ist das zusätzliche Gewicht im Vergleich zu dem ohnehin vorhandenen Gewicht des Rucksacks kaum von Bedeutung.

Zudem bietet die Unterbringung der Suchantennen in dem Rucksack den Vorteil, dass die Suchantennen räumlich voneinander getrennt angeordnet werden können. Die räumlich voneinander getrennte Anordnung der Suchantennen führt dazu, dass sich die Suchantennen beim Empfangen des Sendesignals besonders wenig beeinflussen können. Dies erleichtert das Auffinden eines das Sendesignal aussendenden Suchgeräts.

Der Rucksack bietet durch das Vorhandensein der im Wesentlichen orthogonal zueinander ausgerichteten Flächen eine besonders gute Möglichkeit, großflächige Rahmenantennen oder große Ferritantennen an den Flächen unterzubringen.

Als Antennen für das Suchgerät können dementsprechend beispielsweise Ferritantennen zum Einsatz kommen. Solche vergleichsweise bruchempfindlichen Antennen benötigen jedoch einen Schutz vor mechanischen Belastungen, etwa durch Vorsehen eines Kunststoffgehäuses. Im Vergleich zur Integration von Ferritantennen in ein Kleidungsstück, einen Tragegurt oder ähnliches bietet die Unterbringung solcher Ferritantennen an den Flächen des Rucksacks jedoch den Vorteil, dass selbst solche harten oder voluminösen Schutzgehäuse keinerlei Reduktion des Tragekomforts des Suchgeräts oder Sendegeräts für den Benutzer mit sich bringen.

Bevorzugt werden jedoch die wenigstens zwei Raumachsen mittels Rahmenantennen abgedeckt. Solche Luftspulen haben nämlich im Vergleich zu Ferritantennen ein geringeres Gewicht, und sie sind günstiger herzustellen. Des Weiteren sind Rahmenantennen oder Luftspulen weniger schlagempfindlich als Ferritantennen.

Eine besonders komfortable und zielführende Nutzbarkeit des Suchgeräts ist gegeben, wenn gemäß einer vorteilhaften Ausgestaltung die Anzeigevorrichtung außerhalb eines Aufnahmeraums des Rucksacks positioniert ist. Beispielsweise kann die Anzeigevorrichtung, also etwa eine Displayeinheit, an einem Hüftgurt des Rucksacks angeordnet sein. So kann ein den Rucksack tragender Benutzer, welcher das Suchgerät nutzt, leicht einen Blick auf die Anzeigevorrichtung werfen und hierbei den Verschütteten suchen.

Die Anzeigevorrichtung kann des Weiteren eine Komponente einer mobilen Kommunikationsvorrichtung sein. Üblicherweise werden nämlich mobile Kommunikationsvorrichtungen wie etwa ein Mobiltelefon, insbesondere ein Smartphone, eine Smartwatch oder dergleichen von einer den Rucksack mit dem Suchgerät nutzenden Person ohnehin mitgeführt. Das mobile oder tragbare Endgerät, dessen Anzeigevorrichtung oder Display zum Darstellen der Richtung genutzt werden kann, aus welcher das Sendesignal kommt, kann jedoch auch als PDA (Persönlicher Digitaler Assistent) oder Tablet-Computer ausgebildet sein, oder es kann sich um eine Datenbrille oder dergleichen mobiles Endgerät handeln.

Eine solche mobile Kommunikationsvorrichtung, welche drahtlos mit den Suchantennen gekoppelt ist, ist besonders gut handhabbar, weist also ein verbessertes Handling auf. Auch können auf der Anzeige der mobilen Kommunikationsvorrichtung dargestellte Informationen wie die Richtung und/oder eine Entfernung zu dem Verschütteten besonders leicht von der Anzeige der mobilen Kommunikationsvorrichtung abgelesen werden, wenn diese in der Hand gehalten wird, am Handgelenk getragen wird oder als Datenbrille ausgebildet ist.

Als weiter vorteilhaft hat es sich gezeigt, wenn in dem Rucksack wenigstens ein elektrischer Energiespeicher angeordnet ist, welcher zum Versorgen von Komponenten des Suchgeräts mit elektrischer Energie ausgebildet ist. Der Rucksack bietet nämlich ein ausreichend großes Volumen, um einen vergleichsweise großen Energiespeicher, insbesondere einen Akkumulator, oder auch mehr als einen Energiespeicher unterzubringen. Dieser wenigstens eine Energiespeicher kann entsprechend genutzt werden, um eine Recheneinrichtung sowie die Antennen des Suchgeräts mit Energie zu versorgen. Während ein üblicher Energiespeicher eines Suchgeräts (bei Zimmertemperatur) beispielsweise eine elektrische elektrische Energie von etwa 3000 mWh bis 6000 mWh haben kann, kann der in im Rucksack untergebrachte, größere Energiespeicher (oder können wenigstens zwei Energiespeicher) eine mindestens doppelt so große elektrische Energiemenge bereitstellen. Bei dem im Rucksack zur Verfügung stehenden Bauraum kann auch leicht noch mehr elektrische Energie mittels des wenigstens einen Energiespeichers bereitgestellt werden.

Durch das Vorsehen eines vergleichsweise großen Energiespeichers oder mehrerer Energiespeicher kann die Betriebszeit des Suchgeräts, welches unter der naturgemäß tiefen Außentemperatur leidet, auf das Zweifache oder mehr der üblichen Betriebszeit erhöht werden. Dennoch braucht der Benutzer oder Anwender keine relevante Reduktion des Tragkomforts des Suchgeräts aufgrund einer zusätzlichen Batterie oder eines zusätzlichen Akkus in Kauf zu nehmen. Letzteres wäre jedoch bei der Integration eines großen Energiespeichers oder mehrerer Energiespeicher in ein Kleidungsstück, einen Tragegurt, einen Rückenprotektor oder dergleichen der Fall.

Vorteilhaft weist der wenigstens eine im Rucksack angeordnete Energiespeicher einen Anschluss auf, über welchen die mobile Kommunikationsvorrichtung mit elektrischer Energie versorgt werden kann. Dies kann beispielsweise erfolgen, indem an den Anschluss ein Ladekabel für die mobile Kommunikationsvorrichtung angeschlossen wird. Es kann also während des Suchbetriebs die mobile Kommunikationsvorrichtung mit elektrischer Energie aus dem sich im Rucksack befindenden elektrischen Energiespeicher versorgt werden. Dies hat den Vorteil, dass die Energieversorgung auch für den Fall sichergestellt ist, dass eine eigene Energiequelle, beispielsweise ein Akkumulator, der mobilen Kommunikationsvorrichtung bereits erschöpft ist.

Insbesondere, wenn für den Benutzer wichtige Funktionen des Suchgeräts, beispielsweise eine Vereinfachung der Suche, erst in Kombination mit der mobilen Kommunikationsvorrichtung sinnvoll eingesetzt werden können, ist eine ausreichende Energieversorgung besonders wichtig. Daher kann beispielsweise bei mehrtägigen Skitouren oder Expeditionen, bei welchen kein Zugang zu einem Stromnetz besteht, ein zusätzlicher oder größerer beziehungsweise leistungsfähigerer Akkumulator einen relevanten Sicherheitsvorteil bieten. Der Ansatz, den wenigstens einen Energiespeicher im Rucksack unterzubringen, bietet diesbezüglich deutliche Vorteile gegenüber einer Integration des Energiespeichers in die Bekleidung, einen Tragegurt, einen Protektor oder dergleichen. Bei derartigen Suchgeräten ist nämlich die vom Anwender oder Benutzer akzeptierte Baugröße des wenigstens einen Energiespeichers deutlich geringer als bei der Unterbringung desselben in dem Rucksack, welcher ein größeres Volumen zur Verfügung stellt.

Von Vorteil ist es weiterhin, wenn wenigstens eine dritte Suchantenne vorgesehen ist, welche mit einer dritten Fläche des Rucksacks gekoppelt ist. Hierbei ist die dritte Suchantenne orthogonal zu der ersten Fläche und zu der zweiten Fläche angeordnet. Durch das Unterbringen von drei orthogonal zueinander ausgerichteten Antennen in oder an Flächen des Rucksacks können besonders gut alle drei Raumachsen mittels der Suchantennen abgedeckt werden. Zudem lassen sich die drei oder mehr Suchantennen durch Koppeln mit den Flächen des Rucksacks besonders gut in einem starren Winkelverhältnis zueinander anordnen und halten. Dies ist zudem insbesondere für vergleichsweise großflächige Antennen bedeutend einfacher zu bewerkstelligen als bei Anordnung der Antennen etwa in einem Rückenprotektor.

Von Vorteil ist es weiterhin, wenn die erste Fläche als eine beim Tragen des Rucksacks am Rücken eines Benutzers anliegende Rückenfläche des Rucksacks und die zweite Fläche als Seitenfläche des Rucksacks ausgebildet ist. Mit an diesen Flächen oder Begrenzungsflächen des Rucksacks angeordneten Antennen lässt sich besonders gut die Richtung des Verschütteten in einer senkrecht zu diesen beiden Flächen ausgerichteten Ebene, also etwa parallel zur Schneeoberfläche bestimmen.

Zudem lässt sich insbesondere an oder in der Rückenfläche des Rucksacks eine Suchantenne besonders gut und wenig störend unterbringen. Um besonders große Suchantennen bereitzustellen, können dieselben nahezu die gesamte Rückenfläche und nahezu die gesamte Seitenfläche des Rucksacks einnehmen.

Bei einer derartigen Anordnung der ersten Suchantenne und der zweiten Suchantenne ist bevorzugt die dritte Suchantenne mit einer Bodenfläche des Rucksacks gekoppelt. Auch in oder an der Bodenfläche lässt sich nämlich besonders einfach eine vergleichsweise große Suchantenne unterbringen.

Als weiter vorteilhaft hat es sich gezeigt, wenn mindestens eine der Flächen des Rucksacks, mit welcher eine der Suchantennen gekoppelt ist zumindest bereichsweise mittels wenigstens einer Aussteifungsvorrichtung ausgesteift ist. So kann besonders gut ein starres Winkelverhältnis der Antennenachsen zueinander gewährleistet werden.

Dem liegt die Erkenntnis zugrunde, dass eine einmalige oder auch laufende oder fortwährende Änderung des Winkels der Antennenachsen zueinander während des Suchbetriebs für eine höhere Komplexität bei der Ermittlung der Richtung und der Signalstärke des empfangenen Sendesignals sorgt. Das starre Anordnen der Antennenachsen relativ zueinander, insbesondere das zueinander orthogonale Ausrichten, lässt sich jedoch mittels des die wenigstens eine Aussteifungsvorrichtung aufweisenden Rucksacks besonders gut erreichen. Der Rucksack ist also bevorzugt insbesondere im Vergleich zu einem herkömmlichen Freizeitrucksack zusätzlich versteift.

Zum Versteifen einer oder mehrerer Suchantennen, insbesondere Rahmenantennen, können die Suchantennen selber verwindungssteif ausgeprägt werden. Dies kann etwa durch das Vorsehen von Nähten in dem Material der Flächen des Rucksacks erfolgen, welches die Suchantennen umhüllt oder an die Suchantennen angrenzt. Jedoch können auch Streben, Rohre, Platten oder dergleichen, insbesondere aus Kunststoff oder Metall, in den Flächen angeordnet werden, um eine besonders große Formstabilität der Suchantennen, insbesondere Rahmenantennen, zu gewährleisten.

Die Unterbringung derartiger Aussteifungsvorrichtungen im Rucksack lässt sich bedeutend leichter bewerkstelligen als bei einer Integration von Rahmenantennen in ein Kleidungsstück, einen Rückenprotektor, einen Tragegurt oder ähnliches.

Als weiter vorteilhaft hat es sich gezeigt, wenn zum Aussteifen des Rucksacks Bauteile verwendet werden, welche ohnehin in dem Rucksack untergebracht werden sollen. Es können also Aussteifungsvorrichtungen in dem Rucksack für die Orthogonalität der Suchantennen zueinander sorgen, welche beispielsweise synergistisch mit weiteren Komponenten des Suchgeräts kombiniert werden können. So kann beispielsweise ein Gehäuse eines Energiespeichers in dem Rucksack als die wenigstens eine Aussteifungsvorrichtung eingesetzt werden. Denn ein derartiger Energiespeicher oder mehrere Energiespeicher wie etwa Akkumulatoren oder Batterien mit einem jeweiligen Gehäuse geben bereits ein starres oder eigensteifes Gebilde vor.

Ebenso kann eine üblicherweise in einem Gehäuse untergebrachte Platine des Suchgeräts als starres Gebilde genutzt werden, um den Rucksack auszusteifen. Zusätzlich zu den Suchantennen lassen sich nämlich insbesondere elektronische Komponenten des Suchgeräts wie etwa die Platine besonders gut an einer der Flächen des Rucksacks anordnen oder in die Flächen integrieren, etwa indem sie von dem die Flächen bildenden Material, insbesondere Kunststoffmaterial, ummantelt werden.

Derartige Bauteile können an den orthogonalen Flächen des Rucksacks relativ zueinander so positioniert werden, wie die Suchantennen ausgerichtet sind. Die dadurch entstehenden Aussteifungen des Rucksacks können dann einfach genutzt werden, um die Suchantennen mit besonders geringem Materialaufwand, Platzaufwand und Kostenaufwand in orthogonaler Stellung zueinander zu fixieren.

Wenn in den Rucksack eine Lawinen-Airbag-Einheit integriert ist, so können auch Bauteile der Lawinen-Airbag-Einheit synergistisch zur Aussteifung verwendet werden. Dann trägt das mindestens eine Bauteil der Lawinen-Airbag-Einheit dazu bei, eine einmalige oder auch laufende Verwindung oder Torsion von wenigstens einer Suchantenne zu minimieren oder die statische oder laufende Änderung des Winkels der Antennenachsen zueinander zumindest einzuschränken. An Bauteilen der Lawinen-Airbag-Einheit, welche zum Aussteifen des Rucksacks verwendet werden können, kommen insbesondere eine Trägerplatte, ein Venturigehäuse, ein Ventil eines Venturigehäuses, ein Ventilator, eine Gaskartusche, Schläuche oder dergleichen in Betracht.

Als weiter vorteilhaft hat es sich gezeigt, wenn durch die wenigstens eine Aussteifungsvorrichtung zumindest ein Bereich einer Bodenplatte und/oder einer Rückenplatte des Rucksacks gebildet ist. Derartige Aussteifungen sind nämlich besonders wenig störend in den Rucksack integrierbar.

Als weiter vorteilhaft hat es sich gezeigt, wenn wenigstens zwei Aussteifungsvorrichtungen in orthogonaler Stellung zueinander starr miteinander verbunden sind. Eine besonders gute Aussteifung lässt sich erreichen, wenn drei plattenförmige Aussteifungsvorrichtungen vorgesehen sind, welche mit einem Rand oder einer Schmalseite an zwei angrenzenden plattenförmigen Aussteifungsvorrichtungen anliegen. So lässt sich besonders gut und robust das bevorzugt orthogonale Winkelverhältnis von drei Suchantennen festlegen.

Von Vorteil ist es weiterhin, wenn anhand der Anordnung des Rucksacks am Rücken des Benutzers Aussagen über die Lage des Benutzers in Relation zur Lage der Sendeantennen getroffen werden können. Dies ist bei der Integration der Sendeantennen oder Suchantennen in ein Kleidungsstück aufgrund der unterschiedlichen Möglichkeiten, das Kleidungsstück zu tragen, und aufgrund ergonomischer Unterschiede der jeweiligen Anwender oder Benutzer des Kleidungsstücks nicht möglich. Zudem ist es nicht unüblich, dass Kleidungsstücke während eines Sturzes in einer Lawine am Körper des Trägers verschoben werden.

Vorteilhaft sind jedoch bevorzugt bei dem Rucksack zusätzlich zu Schultergurten des Rucksacks Mittel vorgesehen, um den Rucksack in einer vorgebbaren Position am Körper eines Benutzers des Rucksacks zu fixieren. So kann insbesondere verhindert werden, dass dem Anwender oder Benutzer der Rucksack beim Sturz in der Lawine entrissen wird. Dies kann beispielsweise durch eine besonders stark ausgeführte Befestigung des Rucksacks am Benutzer sichergestellt werden. Beispielsweise können Gurtbänder, welche zusätzlich zu den Schultergurten den Rucksack am Körper des Benutzers halten, und auch die Schultergurten selber entsprechend reißfest dimensioniert und vernäht werden.

So können insbesondere mehrlagige Gurtbänder zum Einsatz kommen, deren Lagen insbesondere durch Riegelnähte vernäht sein können. Insbesondere Riegelnähte können jedoch auch generell zum Verstärken und Erhöhen der Reißfestigkeit zum Einsatz kommen. Des Weiteren kann ein von einem Hüftgurtteil zum gegenüberliegenden Hüftgurtteil über den Rückenbereich durchlaufendes Gurtband verwendet werden, um einen Hüftgurt besonders sicher mit dem Rückenbereich oder der Rückenfläche des Rucksacks zu verbinden. Auch können mehrere Gurtbänder und andere Komponenten des Rucksacks entsprechend fest miteinander vernäht werden, um eine derartige Reißfestigkeit zu erzielen.

Insbesondere wenn der Rucksack eine Lawinen-Airbag-Einheit aufweist, ergeben sich Synergien. Denn ein Rucksack mit einem Lawinen-Airbag ist üblicherweise besonders wegreißsicher ausgebildet. Dies kann genutzt werden, um den das Suchgerät aufweisenden Rucksack ebenfalls gegen ein Sich-Lösen vom Körper des Benutzers sicher auszubilden und zugleich Gewichtseinsparungen und Kosteneinsparungen zu erzielen.

Eine Kombination der Lawinen-Airbag-Einheit mit dem Suchgerät im Rucksack bietet somit die Möglichkeit, Vorteile eines Airbagrucksacks auch für den mit dem Suchgerät ausgestatteten Rucksack zu nutzen.

Die Trageposition eines Rucksacks ist aufgrund der menschlichen Anatomie weitestgehend vorgegeben, und insbesondere ist der Rucksack durch Schultergurt und Hüftgurt am Rücken des Benutzers fixiert. Somit trägt jeder Anwender oder Benutzer den Rucksack in annähernd gleicher Position und Lage am Rücken. Die Gurte sowie das gesamte Tragesystem werden also bevorzugt durch entsprechend robuste Verarbeitung so ausgelegt, dass der Rucksack selbst während eines Sturzes und nach einem Sturz in einer Lawine eine definierte Position und Lage am Rücken des Benutzers beibehält. Dies kann insbesondere sichergestellt werden, indem der Rucksack als Rucksack mit Lawinenairbag ausgebildet ist.

Eine besonders zuverlässige Fixierung des Rucksacks am Rücken des Benutzers lässt sich des Weiteren erreichen, wenn die Mittel wenigstens eine Beinschlaufe umfassen, welche mit dem Rucksack gekoppelt ist. Eine Beinschlaufe (und insbesondere zwei Beinschlaufen) verhindert nämlich besonders sicher ein Hochrutschen des Rucksacks über die Schultern des Benutzers bei einem Sturz insbesondere in einer Lawine. Dies lässt sich anhand von Erfahrungsberichten über Unfälle am Berg und Entwicklungen im Bereich von Lawinenairbag-Rücksäcken bestätigen. Insofern ist auch die Unterbringung der Suchantennen im Rucksack von Vorteil.

Zusätzlich oder alternativ können die Mittel einen mit dem Rucksack gekoppelten Klettergurt umfassen. Bei einem solchen Klettergurt können insbesondere alternativ oder zusätzlich zu Beinschlaufen ein Hüftgurt und/oder Armschlaufen vorgesehen sein. Auch ein derartiger Klettergurt sorgt für eine besonders gute Fixierung des Rucksacks am Rücken. Des Weiteren sind Beinschlaufen und insbesondere Klettergurte besonders reißfest ausgebildet, sodass ein Wegreißen des Rucksacks vom Körper des Benutzers besonders sicher vermieden werden kann.

Für eine robuste Auslegung des Rucksacks ist es des Weiteren vorteilhaft, wenn wenigstens eine Schnalle zum Verbinden von jeweiligen Bereichen zumindest eines Gurts des Rucksacks aus einem Metall und/oder aus einem hochfesten Kunststoff gebildet ist. Eine solche hochfeste Schnalle kann für eine kraftschlüssige Verbindung der Gurtbereiche eingesetzt werden. Hierbei können insbesondere die Bereiche eines Schultergurts und/oder ein Hüftgurts und/oder ein Brustgurts mittels einer jeweiligen Schnalle auf besonders sichere und zuverlässige Weise miteinander verbunden werden.

Mit der Empfangseinheit des Suchgeräts kann eine Benutzerschnittstellenvorrichtung in Verbindung stehen, welche die Anzeigevorrichtung aufweist. So kann etwa eine Recheneinrichtung mit einem Display beispielsweise über eine Kabelverbindung mit den Suchantennen gekoppelt sein, wobei die Richtung auf der Anzeigevorrichtung dargestellt wird. Eine solche Benutzerschnittstellenvorrichtung, welche am Rucksack angeordnet ist, ist insbesondere für den Fall sinnvoll, dass der Benutzer des Rucksacks eine mobile Kommunikationsvorrichtung oder Benutzerschnittstellenvorrichtung verliert, welche die Anzeigevorrichtung aufweist. Dasselbe gilt für eine Situation, in welcher die mobile Kommunikationsvorrichtung aufgrund einer Fehlfunktion nicht verlässlich ist oder in welcher ein elektrischer Energiespeicher der Kommunikationsvorrichtung leer ist. In diesem Fall ist dann in den Rucksack die Benutzerschnittstellenvorrichtung für eine Notsuchfunktion integriert. Der Benutzer kann dann auch ohne die mobile Benutzerschnittstellenvorrichtung mit dem Rucksack eine Suche durchführen.

Schließlich hat es sich als vorteilhaft gezeigt, wenn der Rucksack wenigstens eine Bedieneinheit zum Umschalten zwischen einem Empfangsmodus und einem Sendemodus des Suchgeräts umfasst, welche an einem Schultergurt und/oder an einem Hüftgurt des Rucksacks angeordnet ist. Der Schultergurt oder Hüftgurt des Rucksacks wird nämlich über der äußersten Bekleidungsschicht getragen. So kann der Benutzer oder Anwender schnell und effektiv Bedienhandlungen mit der Bedieneinheit vornehmen, ohne dass er den Rucksack abzulegen braucht.

Bei der Integration einer Bedieneinheit in einen Rückenprotektor oder einen Tragegurt, welche beide unterhalb der obersten Bekleidungsschicht getragen werden, muss demgegenüber zuerst ein Teil der Bekleidung abgelegt oder geöffnet werden, um Zugang zu der Bedieneinheit zu erlangen.

Die wenigstens eine Bedieneinheit kann insbesondere drahtlos mit dem Suchgerät verbunden sein. Dadurch ist eine Beschädigung einer Kabelverbindung zwischen der Bedieneinheit und den übrigen Komponenten des Suchgeräts vermieden. Wenn die wenigstens eine Bedieneinheit lösbar an dem Schultergurt oder Hüftgurt angeordnet ist, ist zudem eine besonders gute Handhabbarkeit gegeben. Des Weiteren ist dann auch die Ablesbarkeit von auf einer Anzeige der Bedieneinheit Dargestelltem verbessert, etwa wenn diese in der Hand gehalten wird. Dies wird durch eine drahtlose Verbindung mit dem Suchgerät erleichtert.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisiert einen Rucksack mit drei orthogonal ausgerichteten Suchantennen, welche an Flächen des Rucksacks angeordnet sind, wobei Bereiche eines Hüftgurts des Rucksacks mittels einer hochfesten Schnalle miteinander verbunden sind und der Hüftgurt durch ein reißfestes Bandmaterial verstärkt ist, und wobei eine Displayeinheit, welche am Hüftgurt angeordnet ist, über eine Kabelverbindung mit den Suchantennen verbunden ist;
- Fig. 2: drei orthogonale Rahmenantennen, welche durch steife Bauelemente in einem starren Winkelverhältnis zueinander gehalten und gegen Verwindung und Torsion gesichert sind; und
- Fig. 3: einen Rucksack mit einem Sende- und Suchgerät, welches mit einer Benutzerschnittstellenvorrichtung in Form eines Smartphones in Verbindung steht.

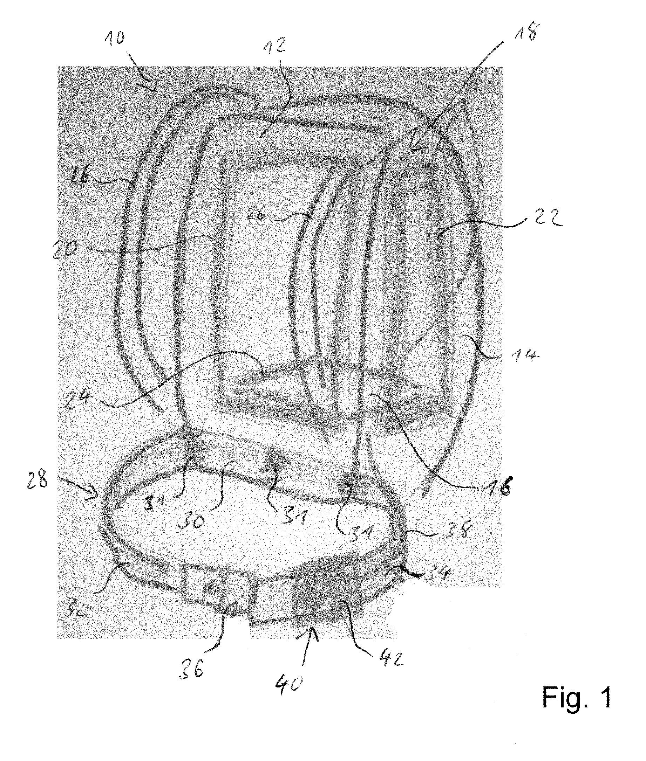

Ein in Fig. 1 gezeigter Rucksack 10 umfasst einen Aufnahmeraum für zu verstauende Gegenstände, welcher von Flächen des Rucksacks 10 begrenzt ist. Die etwa aus einem flexiblen Kunststoffgewebe gebildeten Flächen umfassen beispielsweise eine erste Fläche in Form einer Rückenfläche 12, welche beim Tragen des Rucksacks 10 am Rücken eines Benutzers des Rucksacks 10 anliegt, eine zweite Fläche in Form einer Seitenfläche 14 und eine dritte Fläche in Form einer Bodenfläche 16. Die Bodenfläche 16 braucht den Rucksack 10 nicht unterseitig zu begrenzen, sondern sie kann auch als Boden eines in dem Rucksack 10 vorgesehenen Fachs ausgebildet sein.

Der Rucksack 10 umfasst ein Suchgerät, welches als Lawinen-Verschütteten-Suchgerät ausgebildet ist und eine Empfangseinheit 18 aufweist. Die Empfangseinheit 18 umfasst beispielsweise drei Suchantennen 20, 22, 24, welche vorliegend als Rahmenantennen ausgebildet sind. Die Suchantennen 20, 22, 24 sind mit den jeweiligen Flächen des Rucksacks 10 gekoppelt. Hierbei wird der Umstand ausgenutzt, dass die Rückenfläche 12, die Seitenfläche 14 und die Bodenfläche 16 des Rucksacks 10 im Wesentlichen orthogonal zueinander angeordnet sind. Durch das Anordnen der Suchantennen 20, 22, 24 im Bereich der entsprechenden Flächen wird also dafür gesorgt, dass auch die Suchantennen 20, 22, 24 in orthogonaler Stellung zueinander fixiert sind.

Der Rucksack 10 weist zwei Schultergürtel 26 sowie einen Hüftgurt 28 auf. Der Hüftgurt 28 ist vorliegend mit einem hochfesten Gurtband 30 aus reißfestem Bandmaterial versehen, welches von einem in Fig. 1 linken Hüftgurtteil 32 über den Rückenbereich beziehungsweise die Rückenfläche 12 des Rucksacks 10 zu einem rechten Hüftgurtteil 34 des Hüftgurts 28 verläuft. Durch Nähte 31 ist das Gurtband 30 in besonders zuverlässiger Weise mit den Hüftgurtteilen 32, 34 und der Rückenfläche 12 des Rucksacks verbunden.

Des Weiteren ist der Hüftgurt 28 mit einer hochfesten Schnalle 36 etwa aus Metall versehen. Diese besonders stabile Ausbildung des Hüftgurts 28 sorgt dafür, dass der am Körper des Benutzers getragene Rucksack 10 etwa beim Sturz in einer Lawine nicht vom Körper des Benutzers weggerissen wird. Zur besonders zuverlässigen Fixierung des Rucksacks 10 am Benutzer oder Träger kann zusätzlich wenigstens eine (nicht gezeigte) Beinschlaufe und/oder ein (nicht gezeigter) Klettergurt mit dem Rucksack 10 gekoppelt sein.

Die Signale der Suchantennen 20, 22, 24 werden über eine Leitung oder dergleichen Kabelverbindung einer Recheneinheit 40 zugeführt, welche ein Display 42 oder eine derartige Anzeigevorrichtung aufweist. Auf dem Display 42 kann beispielsweise die Richtung angegeben werden, in welcher sich das in einem Sendemodus befindende Suchgerät eines Verschütteten befindet, welcher ebenfalls einen Rucksack 10 mit Suchgerät trägt.

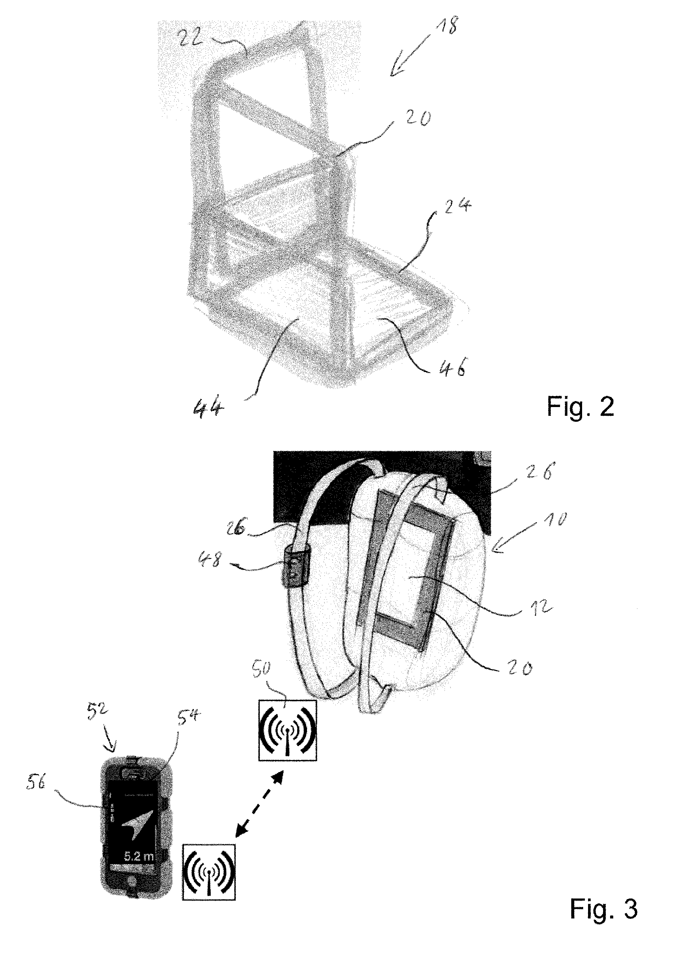

Um sicherzustellen, dass sich die Winkel von Achsen der Suchantennen 20, 22, 24 relativ zueinander während des Suchbetriebs so wenig wie möglich ändern, ist der Rucksack 10 vorliegend ausgesteift, was anhand von Fig. 2 erläutert werden soll.

In Fig. 2 ist die an einer der Seitenflächen 14 angeordnete Rahmenantenne oder Suchantenne 22 an einer anderen Seite angeordnet gezeigt als in Fig. 1. Jedoch ist aus Fig. 2 ersichtlich, dass die drei orthogonalen Rahmenantennen durch eigensteife Bauelemente starr relativ zueinander fixiert und gegen eine Verwindung und Torsion gesichert sind. Als ein solches starres Bauelement kann beispielsweise ein elektrischer Energiespeicher 44 zum Einsatz kommen, welcher in einem Gehäuse angeordnet sein kann. Ebenso kann eine in einem Gehäuse angeordnete Platine 46 des Suchgeräts dem Aussteifen der Rahmenantennen dienen. Des Weiteren können auch Komponenten einer (nicht gezeigten) Lawinen-Airbag-Einheit zum Aussteifen der Suchantennen 20, 22, 24 herangezogen werden.

In Fig. 3 ist ein alternativer Rucksack 10 gezeigt, wobei lediglich die in der Rückenfläche 12 angeordnete Rahmenantenne oder Suchantenne 20 dargestellt ist. Hier ist erkennbar, dass etwa an einem der Schultergurte 26 eine Bedieneinheit 48 angeordnet sein kann, mittels welcher sich die vorliegend als Rahmenantennen ausgebildeten Suchantennen 20, 22, 24 von einem Empfangsmodus in einen Sendemodus umschalten lassen. Diese Bedieneinheit 48 ist für den Benutzer des Rucksacks 10 besonders gut erreichbar, da die Schultergurte 26 über der äußersten Bekleidungsschicht verlaufen.

Ein in Fig. 3 schematisch gezeigtes Sendesignal 50 wird mittels einer tragbaren Benutzerschnittstellenvorrichtung etwa in Form eines Smartphones 52 ausgewertet. Auf einem Display 54 des Smartphones 52 kann dann ein Pfeil oder dergleichen eine Richtung 56 angeben, in welcher sich der Rucksack 10 des Verschütteten bezogen auf eine das Smartphone 52 handhabende Person befindet.

## Patentansprüche

1. Rucksack (10) mit einem Suchgerät, insbesondere einem Lawinen-Verschütteten-Suchgerät, mit einer Empfangseinheit (18), die mindestens eine erste und eine zweite Suchantenne (20, 22) zum Empfangen mindestens eines Sendesignals (50) umfasst, welches einen mit einer vorgebbaren Sendepuls-Periode ausgestrahlten Sendepuls einer vorgebbaren Sendefrequenz umfasst, wobei die Empfangseinheit (18) ausgelegt ist, mindestens einem empfangenen Sendesignal (50) eine Richtung (56) bezogen auf die Lage des Suchgeräts zuzuordnen und diese Richtung an ihrem Ausgang an eine Anzeigevorrichtung (42, 54) bereitzustellen, wobei der Rucksack (10) mindestens eine erste und eine zweite orthogonal zueinander angeordnete Flächen (12, 14), insbesondere Begrenzungsflächen, aufweist,
**dadurch gekennzeichnet, dass**
die erste Suchantenne (20) mit der ersten Fläche (12) gekoppelt ist und die zweite Suchantenne (22) mit der zweiten Fläche (14), so dass die erste und die zweite Suchantenne (20, 22) in orthogonaler Stellung zueinander fixiert sind.

2. Rucksack nach Anspruch 1,
**dadurch gekennzeichnet, dass**
die Anzeigevorrichtung (42, 54) außerhalb eines Aufnahmeraums des Rucksacks (10) positioniert ist.

3. Rucksack nach Anspruch 1 oder 2,
**dadurch gekennzeichnet, dass**
die Anzeigevorrichtung (54) eine Komponente einer mobilen Kommunikationsvorrichtung, insbesondere eines PDA, eines Mobiltelefons (52), einer Datenbrille, einer Smartwatch oder eines Tablet-Computers, ist.

4. Rucksack nach Anspruch 3,
**dadurch gekennzeichnet, dass**
wenigstens ein in dem Rucksack (10) angeordneter elektrischer Energiespeicher (44), welcher zum Versorgen von Komponenten des Suchgeräts mit elektrischer Energie ausgebildet ist, einen Anschluss zum Versorgen der mobilen Kommunikationsvorrichtung mit elektrischer Energie aufweist.

5. Rucksack nach einem der vorhergehenden Ansprüche,
**dadurch gekennzeichnet, dass**
mindestens eine dritte Suchantenne (24) vorgesehen ist, welche mit einer dritten Fläche, insbesondere Bodenfläche (16), des Rucksacks (10) gekoppelt ist, und welche orthogonal zu der ersten Fläche und zu der zweiten Fläche angeordnet ist.

6. Rucksack nach einem der vorhergehenden Ansprüche,
**dadurch gekennzeichnet, dass**
die erste Fläche (12) als eine beim Tragen des Rucksacks (10) am Rücken eines Benutzers des Rucksacks (10) anliegende Rückenfläche des Rucksacks (10) und die zweite Fläche (14) und als Seitenfläche des Rucksacks (10) ausgebildet ist.

7. Rucksack nach einem der vorhergehenden Ansprüche,
**dadurch gekennzeichnet, dass**
mindestens eine der Flächen (12, 14, 16) des Rucksacks (10), mit welcher eine der Suchantennen (20, 22, 24) gekoppelt ist, insbesondere alle Flächen (12, 14, 16), mit welchen die Suchantennen (20, 22, 24) gekoppelt sind, zumindest bereichsweise mittels wenigstens einer Aussteifungsvorrichtung ausgesteift ist.

8. Rucksack nach Anspruch 7,
**dadurch gekennzeichnet, dass**
die wenigstens eine Aussteifungsvorrichtung ein Gehäuse eines Energiespeichers (44) und und/oder eine Platine (46) des Suchgeräts /oder ein Bauteil einer Lawinen-Airbag-Einheit umfasst.

9. Rucksack nach Anspruch 7 oder 8,
**dadurch gekennzeichnet, dass**
durch die wenigstens eine Aussteifungsvorrichtung zumindest ein Bereich einer Bodenplatte und/oder einer Rückenplatte des Rucksacks (10) gebildet ist.

10. Rucksack nach einem der Ansprüche 7 bis 9,
**dadurch gekennzeichnet, dass**
wenigstens zwei Aussteifungsvorrichtungen in orthogonaler Stellung zueinander starr miteinander verbunden sind.

11. Rucksack nach einem der vorhergehenden Ansprüche,
**dadurch gekennzeichnet, dass**
zusätzlich zu Schultergurten (26) des Rucksacks (10) Mittel vorgesehen sind, um den Rucksack (10) in einer vorgebbaren Position am Körper eines Benutzers des Rucksacks (10) zu fixieren.

12. Rucksack nach Anspruch 11,
**dadurch gekennzeichnet, dass**
die Mittel mindestens eine Beinschlaufe und/oder einen mit dem Rucksack (10) gekoppelten Klettergurt umfassen.

13. Rucksack nach einem der vorhergehenden Ansprüche,
**dadurch gekennzeichnet, dass**
wenigstens eine Schnalle (36) zum Verbinden von jeweiligen Bereichen (32, 34) zumindest eines Gurts, insbesondere eines Schultergurts und/oder Hüftgurts (28) und/oder Brustgurts, des Rucksacks (10) aus einem Metall und/oder aus einem hochfesten Kunststoff gebildet ist.

14. Rucksack nach einem der vorhergehenden Ansprüche,
**dadurch gekennzeichnet, dass**
der Rucksack (10) eine Benutzerschnittstellenvorrichtung umfasst, welche die Anzeigevorrichtung (42) aufweist.

15. Rucksack nach einem der vorhergehenden Ansprüche,
**dadurch gekennzeichnet, dass**
der Rucksack (10) wenigstens eine, insbesondere mit dem Suchgerät drahtlos verbundene, Bedieneinheit (48) zum Umschalten zwischen einem Empfangsmodus und einem Sendemodus des Suchgeräts umfasst, welche an einem Schultergurt (26) und/oder an einem Hüftgurt (28) des Rucksacks (10) angeordnet ist.
